# EUROPÄISCHE PATENTSCHRIFT

(11) **EP 0 811 280 B1**
(45) Veröffentlichungstag und Bekanntmachung des Hinweises auf die Patenterteilung: **24.07.2002**
(21) Anmeldenummer: 97901006.3
(22) Anmeldetag: 20.12.1996
(51) Int. Cl.: H04B 10/17

(54) **OPTISCHE VERSTÄRKEREINRICHTUNG**
OPTICAL AMPLIFIER ARRANGEMENT
SYSTEME AMPLIFICATEUR OPTIQUE

(30) Priorität: 20.12.1995 DE 19547603
(43) Veröffentlichungstag der Anmeldung: 10.12.1997
(73) Patentinhaber: ALCATEL, 75008 Paris (FR)
(72) Erfinder: OTTERBACH, Jürgen, D-71229 Leonberg (DE); PFEIFFER, Thomas, D-70569 Stuttgart (DE)
(74) Vertreter: Schätzle, Albin, Dipl.-Phys.
(86) Internationale Anmeldenummer: EP9700116
(87) Internationale Veröffentlichungsnummer: WO9723066

(56) Entgegenhaltungen:
- EP-A- 0 663 738
- US-A- 5 436 760
- US-A- 5 467 218
- PATENT ABSTRACTS OF JAPAN vol. 015, no. 480 (P-1284), 5.Dezember 1991 & JP 03 206427 A (MITSUBISHI ELECTRIC CORP), 9.September 1991,

## Beschreibung

Die Erfindung betrifft eine optische Verstärkereinrichtung nach Patentanspruch 1.

Optische Verstärker werden in optischen Übertragungssystemen, z.B. Kabelfernsehverteilsystemen, eingesetzt und dienen der Verstärkung optischer Signale, deren Signalpegel durch optische Komponenten, z.B. Koppler oder Glasfasern, gedämpft wurden. Viele optische Komponenten rufen eine wellenlängenabhängige Dämpfung hervor. Werden in einem optischen Übertragungssystem Signalgemische aus optischen Signalen mit jeweils unterschiedlichen Wellenlängen übertragen, so erhält man am Eingang der optischen Verstärker optische Signale mit unterschiedlichen Signalpegeln, hervorgerufen durch die wellenlängenabhängige Dämpfung. In den Verstärkern werden die unterschiedlichen Signalpegel der optischen Signale innerhalb eines vorgegebenen Bereichs der optischen Eingangsleistung verstärkt, wodurch sich die wellenlängenabhängige Dämpfung bis zum Teilnehmer fortpflanzt, und somit die Reichweite durch die Wellenlänge, die am stärksten gedämpft wird, bestimmt wird.

In dem Artikel "Equalization in Amplified WDM Lightwave Transmission Systems" in IEEE Photonics Technology Letters, Vol. 4, No. 8, August 1992, pages 920-922, ist ein optisches Übertragungssystem beschrieben, in dem Signalgemische aus optischen Signalen mit jeweils unterschiedlichen Wellenlängen von einer Sendeeinrichtung über eine Glasfaserstrecke zu einer Empfangseinrichtung übertragen werden. Zur Kompensation der wellenlängenabhängigen Dämpfung und zur Bereitstellung von optischen Signalen mit gleichem Signalpegel bei der Empfangseinrichtung werden die optischen Signale von der Sendeeinrichtung über einstellbare optische Dämpfer mit jeweils unterschiedlichen Signalpegeln ausgesendet. Optische Signale deren Wellenlänge stärker gedämpft wird, werden mit einem höheren Signalpegel ausgesendet. Für die Einstellung der Signalpegel ist eine Überwachungsleitung von der Empfangseinrichtung zur Sendeeinrichtung notwendig. In einem verzweigten, z.B. baumförmigen, Verteilnetz ist es aufgrund der unterschiedlichen Entfernungen und unterschiedlichen Anzahl von optischen Komponenten zwischen Sendeeinrichtung und Empfangseinrichtungen nur bedingt möglich, die Signalpegel der optischen Signale in der Sendeeinrichtung so einzustellen, daß bei allen Empfangseinrichtungen die gleichen Signalpegel hervorgerufen werden.

Ein streuerbare optische Verstärker ist auch in dem Dokument US 5,467,218 offenbart.

Es ist deshalb Aufgabe der Erfindung eine Einrichtung zur Verfügung zu stellen, mittels derer wellenlängenabhängige Dämpfungen flexibler kompensiert werden können.

Diese Aufgabe wird durch die Lehre des Patentanspruchs 1 gelöst. Vorteilhafte Ausgestaltungen sind den abhängigen Patentansprüchen zu entnehmen.

Ein besonderer Vorteil der Erfindung ist die Erhöhung der Reichweite für optische Signale mit jeweils unterschiedlichen Wellenlängen, die gemeinsam über eine Glasfaserstrecke übertragen werden, durch eine optische Manipulation des wellenlängenabhängigen Spektrums mittels Erbium dotierten Faserverstärkern.

Im folgenden wird die Erfindung anhand eines Ausführungsbeispiels unter Zuhilfenahme der Figuren 1 bis 3 erläutert. Es zeigen:
- Fig. 1: eine schematische Darstellung eines erfindungsgemäßen Übertragungssystems,
- Fig. 2: ein schematisch dargestellter Aufbau einer erfindungsgemäßen Verstärkereinrichtung, und
- Fig. 3: drei Diagramme in denen jeweils der Signalpegel über die Wellenlänge aufgetragen ist.

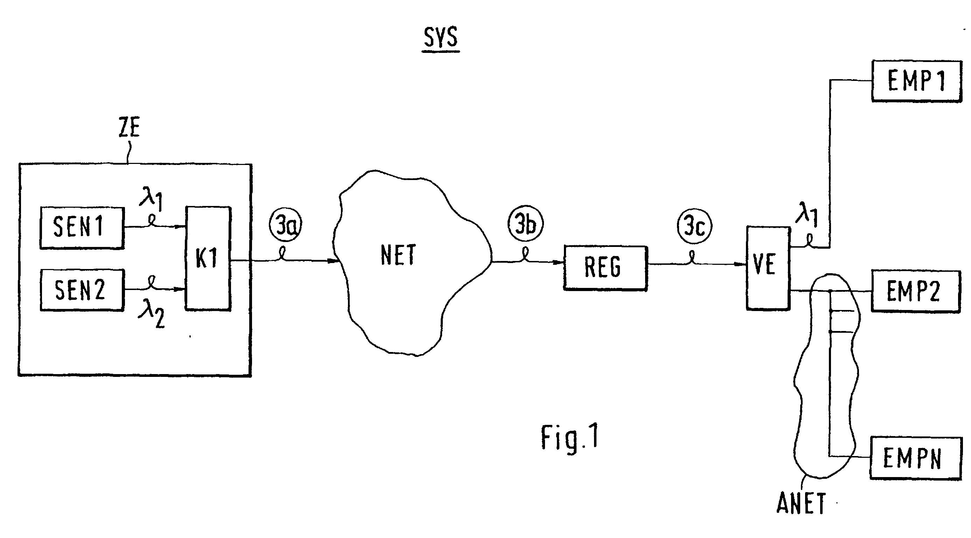

Ein Ausführungsbeispiel der Erfindung wird nun anhand der Figuren 1 bis 3 beschrieben. Fig. 1 zeigt ein erfindungsgemäßes Übertragungssystem. Das Übertragungssystem SYS ist beispielhaft ein hybrides Verteilsystem. Optische Signale werden von einer Zentrale ZE aus über ein Verteilnetz NET zu mehreren Empfangseinrichtungen EMP1 bis EMPX übertragen.

Die Zentrale ZE beinhaltet eine Sendeeinrichtung SEN1, eine Sendeeinrichtung SEN2 und einen optischen Koppler K1.

In der Sendeeinrichtung SEN1 werden optische Signale mit der Wellenlänge λ₁ erzeugt. Die Inhalte der optischen Signale sind z.B. Kinofilme, die in hoher Qualität von der Zentrale ZE über eine Glasfaserstrecke zu der Empfangseinrichtung EMP1 eines Kinos übertragen werden, um dort auf einer Leinwand dargestellt zu werden. Die Wellenlänge λ₁ hat z.B. den Wert 1530 nm. Die Sendezentrale SEN1 beinhaltet einen λ₁-Laser, dessen Ausgangssignale mit den z.B. digital vorliegenden Video- und Audiodaten der Kinofilme moduliert werden.

In der Sendeeinrichtung SEN2 werden optische Signale mit der Wellenlänge λ₂ erzeugt. Die Wellenlänge λ₂ hat z.B. den Wert 1560 nm. Die Inhalte der optischen Signale sind z.B. Fernsehprogramme, die von der Zentrale ZE über eine optische Glasfaserstrecke und einem Anschlußnetz ANET aus Koaxialkabeln zu mehreren Empfangseinrichtungen EMP2 bis EMPN mehrerer Teilnehmer übertragen werden. Die Sendeeinrichtung SEN2 beinhaltet einen λ₂-Laser, dessen Ausgangssignale mit den Video- und Audiodaten der Fernsehprogramme moduliert werden.

Im optischen Koppler K1 werden die optischen Signale der Sendeeinrichtung SEN1 und die optischen Signale der Sendeeinrichtung SEN2 zu einem Signalgemisch zusammengefaßt, das dem Verteilnetz NET zugeführt wird.

Das Verteilnetz NET beinhaltet mehrere optische Koppler, Glasfaserstrecken und ggf. Zwischenverstärker, in denen die optischen Signale verstärkt werden. In vielen optischen Komponenten, wie z.B. Glasfaserleitungen oder mehrstufig kaskadierte Schmelzkoppler für Aufteilungsfaktoren von z.B. 1:8 oder 1:16 treten wellenlängenabhängige Dämpfungen auf. D.h. die Signalpegel der einzelnen optischen Signale werden unterschiedlich gedämpft. Optische Signale mit der Wellenlänge λ₂ werden z.B. stärker gedämpft als optische Signale mit der Wellenlänge λ₁. Werden die optischen Signale mit der Wellenlänge λ₁ und diejenigen mit der Wellenlänge λ₂ von der Zentrale aus mit gleichen Signalpegeln ausgesandt, so haben die optischen Signale mit der Wellenlänge λ₂ nach Durchlaufen des Verteilnetzes NET einen geringeren Signalpegel, als die optischen Signale mit der Wellenlänge λ₁. Zur Kompensation der wellenlängenabhängigen Dämpfung wird das Signalgemisch über eine Verstärkereinrichtung REG geführt, die hier als optischer Regenerator ausgeführt ist.

Im optischen Regenerator REG werden die optischen Signale des Signalgemisches unterschiedlich verstärkt. Die optischen Signale mit der Wellenlänge λ₂, die hier beispielhaft die höhere Dämpfung erfahren haben, werden mit einer höheren Verstärkung verstärkt als diejenigen mit der Wellenlänge λ₁. Dazu werden die Signalpegel der optischen Signale am Ausgang des optischen Regenerators REG ermittelt und abhängig davon die wellenlängenabhängigen Verstärkungen für die beiden Wellenlängen λ₁ und λ₂ eingestellt. Am Ausgang des optischen Regenerators REG liegt dann ein Signalgemisch an, dessen optische Signale die gleichen Signalpegel haben.

Vom optischen Regenerator REG wird das Signalgemisch zu einer Vorfeldeinrichtung VE geführt. Die Vorfeldeinrichtung VE beinhaltet einen wellenlängenselektiven Koppler und einen optisch/elektrischen Umsetzer. In dem wellenlängenselektiven Koppler wird das Signalgemisch in die optischen Signale mit der Wellenlänge λ₁ und die optischen Signale mit der Wellenlänge λ₂ aufgesplittet. Die optischen Signale mit der Wellenlänge λ₁ werden über eine Glasfaserleitung zu der Empfangseinrichtung EMP1 des Kinos übertragen. Die optischen Signale mit der Wellenlänge λ₂ werden im optisch/elektrischen Umsetzer in elektrische Signale umgesetzt und über das Anschlußnetz zu den Empfangseinrichtungen EMP2 bis EMPX der mehreren Teilnehmer übertragen.

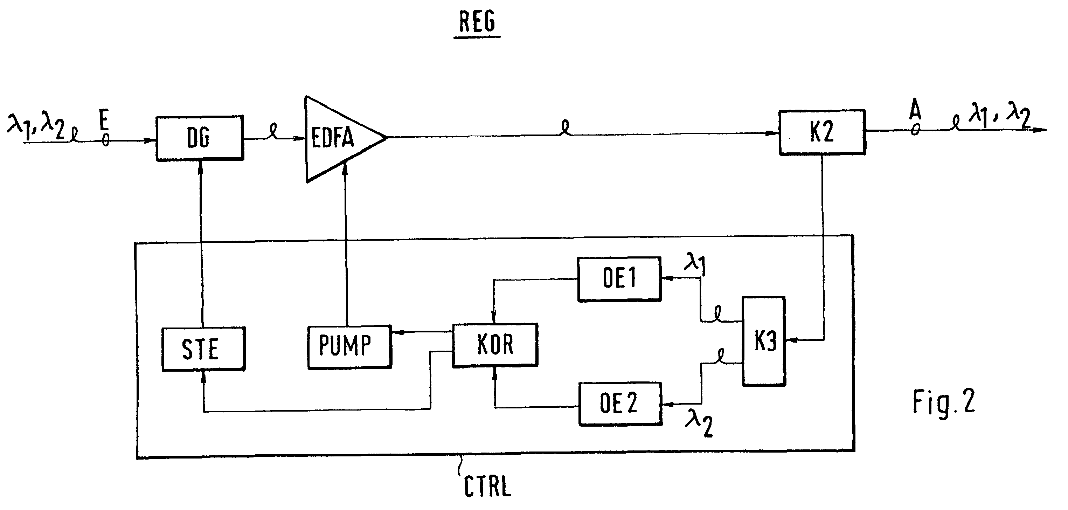

Fig. 2 zeigt eine erfindungsgemäße Verstärkereinrichtung. Die Verstärkereinrichtung ist im Ausführungsbeispiel als optischer Regenerator REG ausgeführt. Der optische Regenerator REG beinhaltet ein steuerbares optisches Dämpfungsglied DG, einen steuerbaren optischen Verstärker EDFA, eine Steuereinheit CTRL und einen asymmetrischen Koppler K2 mit einem Aufteilungsverhältnis von beispielsweise 1:10. Der optische Regenerator REG hat einen Signalgemischeingang E und einen Signalgemischausgang A. Der Signalgemischeingang E ist über eine Serienschaltung aus steuerbarem Dämpfungsglied (DG), steuerbarem optischen Verstärker (EDFA) und asymmetrischem Koppler K2 mit dem Signalgemischausgang A verbunden. Der optische Verstärker EDFA ist im Ausführungsbeispiel ein Erbium dotierter Faserverstärker. Die Verstärkung des optischen Verstärkers EDFA ist über die ihm zugeführte Pumpleistung einstellbar. Abhängig von den Signalpegeln der Eingangssignale und von der Pumpleistung ist diese Verstärkung des optischen Verstärkers EDFA wellenlängenabhängig. Die Verstärkung zeigt einen nichtlinearen Verlauf über der Wellenlänge. Über die Signalpegel der Eingangssignale und der Pumpleistung kann die Form der Verstärkungskurve im Wellenlängenfenster 1520 nm bis 1570 nm individuell eingestellt werden. Werden die Verstärkungen für die Wellenlängen λ₁ und λ₂ so gewählt, daß am Ausgang des optischen Verstärkers EDFA gleiche Signalpegel für beide Wellenlängen λ₁ und λ₂ anliegen, so sind die wellenlängenabhängigen Dämpfungen kompensiert.

Im optischen Dämpfungsglied DG wird der Signalpegel des Signalgemisches einheitlich um einen Faktor größer Eins gedämpft. Die Einstellung des Faktors erfolgt z.B. über eine elektrische Steuerspannung.

Das Signalgemisch am Eingang des optischen Regenerators REG wird in Serie über das Dämpfungsglied DG, den optischen Verstärker EDFA und den asymmetrischen Koppler K2 zum Ausgang des Regenerators REG geführt.

Im asymmetrischen Koppler K2 wird das Signalgemisch aufgeteilt. Z.B. werden 90 % des Signalgemisches dem Ausgang des optischen Regenerators REG und 10 % des Signalgemisches der Steuereinheit CTRL zugeführt. Die Steuereinheit CTRL hat zwei Ausgänge, einen zur Steuerung des optischen Dämpfungsglieds DG und einen zur Steuerung der optischen Pumpleistung des optischen Verstärkers EDFA.

Die Steuereinheit CTRL beinhaltet einen wellenlängenselektiven Koppler K3, zwei optisch/elektrische Umsetzer OE1 und OE2, eine Korrektureinheit KOR, eine Pumplichquelle PUMP und einer Steuerung STE.

Die 10 % des Signalgemisches werden dem wellenlängenselektiven Koppler K3 zugeführt. Im Koppler K3 werden die 10 % des Signalgemisches den Wellenlängen nach aufgeteilt. Die optischen Signale mit der Wellenlänge λ₁ werden dem optisch/elektrischen Umsetzer OE1 zugeführt, in dem sie in ein elektrisches Signal umgesetzt werden. Das elektrische Signal wird der Korrektureinheit KOR zugeführt. Die optischen Signale mit der Wellenlänge λ₂ werden dem optisch/elektrischen Umsetzer OE2 zugeführt, in dem sie in ein elektrisches Signal umgesetzt werden. Das elektrische Signal wird ebenfalls der Korrektureinheit KOR zugeführt.

Die Korrektureinheit KOR beinhaltet einen Mikrocontroller mit zwei internen Analog/Digital-Umsetzern und einem internen Speicher, z.B. ein sog. EPROM (erasable programmable read only memory). Die Ausgangssignale der optisch/elektrischen-Umsetzer OE1 und OE2 werden in den Analog/Digital-Umsetzern in digitale Signale umgesetzt. Die digitalen Signale bestimmen den Parametersatz für die Pumpleistung des Verstärkers EDFA und die Steuerspannung für das Dämpfungsglied DG. Im Speicher sind Werte der Verstärkungskurven des Verstärkers EDFA in Abhängigkeit von der Wellenlänge für unterschiedliche Eingangsleistungen abgespeichert. Die digitalen Signale werden mit den abgespeicherten Werten verglichen und daraus die Steuersignale für die Pumplichtquelle PUMP und die Steuerung STE ermittelt.

Die Pumplichtquelle PUMP liefert dem optischen Verstärker EDFA das nötige Pumplicht. Je höher die Pumpleistung der Pumplichtquelle PUMP, desto mehr angeregte Elektronen stehen im optischen Verstärker EDFA zur stimulierten Emission zur Verfügung. Abhängig vom ermittelten Wert der Korrektureinheit KOR wird die Pumpleistung der Pumplichtquelle PUMP eingestellt.

Die Steuerung liefert dem optischen Dämpfungsglied DG abhängig vom ermittelten Wert der Korrektureinheit KOR die elektrische Steuerspannung zur Einstellung der Dämpfung.

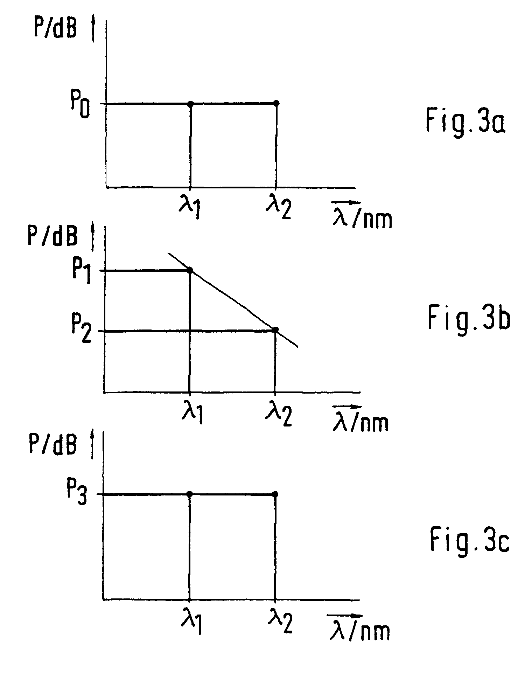

Fig. 3 zeigt drei Diagramme in denen jeweils die Signalpegel über die Wellenlänge aufgetragen sind.

Fig. 3a) zeigt ein Diagramm für die Signalpegel des Signalgemisches am Ausgang der Zentrale ZE aus Fig. 1. Der Signalpegel der optischen Signale mit der Wellenlänge λ₁ und der Signalpegel der optischen Signale mit der Wellenlänge λ₂ sind gleich. Sie haben jeweils den Wert P₀.

Fig. 3b) zeigt ein Diagramm für die Signalpegel des Signalgemisches am Eingang des optischen Regenerators REG aus Fig. 1. Aufgrund der wellenlängenabhängigen Dämpfung im Verteilnetz ist der Signalpegel des optischen Signals mit der Wellenlänge λ₁ z.B. höher als der Signalpegel der optischen Signale mit der Wellenlänge λ₂. Er hat den Wert P₁. Der Signalpegel der optischen Signale mit der Wellenlänge λ₂ hat den Wert P₂. Es gilt P₁ > P₂. Die Verstärkungsfaktoren im optischen Verstärker EDFA aus Fig. 1 werden für die beiden Wellenlängen λ₁ und λ₂ über das Dämpfungsglied DG und die Pumplichtquelle PUMP aus Fig. 2 derart eingestellt, daß der Verstärkungsfaktor für die Wellenlänge λ₁ gleich P₂/P₁ mal dem Verstärkungsfaktor für die Wellenlänge λ₂ entspricht. Dadurch wird erreicht, daß am Ausgang des optischen Verstärkers EDFA die Signalpegel der optischen Signale mit der Wellenlänge λ₁ und der optischen Signale mit der Wellenlänge λ₂ gleich sind und P₃ entsprechen.

Fig. 3c) zeigt ein Diagramm für die Signalpegel des Signalgemisches am Ausgang des optischen Regenerators REG aus Fig. 1. Die Signalpegel der optischen Signale mit der Wellenlänge λ₁ und der optischen Signale mit der Wellenlänge λ₂ sind gleich. Ihr Wert beträgt P₃.

Im Ausführungsbeispiel ist das Übertragungssystem ein hybrides Verteilsystem. Anstelle eines hybriden Verteilsystems kann auch ein optisches Verteilsystem oder ein Breitbandkommunikationssystem mit Rückkanal und hybrider oder rein optischer Struktur verwendet werden. Die Erfindung kann auch in mehreren aufeinanderfolgenden Regeneratoren angewendet werden, wodurch sich die Reichweite der Übertragung des Signalgemisches erhöhen läßt. Des weiteren kann die Erfindung auch in einem optischen Empfänger als Vorverstärker angewendet werden. Ein Vorteil ist, daß dann bereits vorhandene optisch/elektrische Umsetzer ausgenutzt werden können und das Signalgemisch mit kompensierter Dämpfung nicht weiter durch optische Komponenten beeinflußt wird. Ein weiterer Vorteil ist, daß Schwankungen der wellenlängenabhängigen Dämpfung ausgeregelt werden können.

Im Ausführungsbeispiel wird ein Erbium dotierter Faserverstärker als optischer Verstärker verwendet. Anstelle des Erbium dotierten Faserverstärkers kann auch jeder andere optische Verstärker eingesetzt werden, z.B. ein mit einem Element aus der Gruppe der seltenen Erden dotierter Faserverstärker.

Beim Ausführungsbeispiel enthält das Signalgemisch zwei Wellenlängen. Das Signalgemisch kann auch mehr als zwei Wellenlängen enthalten. Dann kann die Steuereinheit z.B. auffolgende zwei Weisen modifiziert werden:
1) Die Steuereinheit enthält dann zwei wellenlängenselektive Koppler. Ein wellenselektiver Koppler filtert die optischen Signale mit der niedrigsten Wellenlänge aus dem Signalgemisch, und der andere diejenigen mit der höchsten Wellenlänge. Die gefilterten optischen Signale werden optisch/elektrisch umgesetzt und anschließend der Korrektureinheit zugeführt, in der die weitere Verarbeitung wie im Ausführungsbeispiel beschrieben erfolgt.
2) Die Steuereinheit beinhaltet mehrere wellenlängenselektive Koppler zum Filtern der einzelnen optischen Signale mit den unterschiedlichen Wellenlängen und für jede Wellenlänge einen optisch/elektrischen Umsetzer zum Umsetzen der optischen Signale in elektrische. Die elektrischen Signale werden der Korrektureinheit zugeführt, die eine Recheneinheit beinhaltet. In der Recheneinheit werden die Signalpegel aller elektrischen Signale in EPROMs gespeichert und durch Interpolation und Vergleich mit den abgespeicherten Werten der Verstärkungskurven die Steuersignale für die Pumplichtquelle und die Steuerung bestimmt.

Mit der Erfindung können also beliebige Dämpfungsverläufe für beliebige Signalgemische kompensiert werden.

## Patentansprüche

1. Optische Verstärkereinrichtung (REG) zur Übertragung von Signalgemischen aus optischen Signalen mit unterschiedlichen Wellenlängen, mit einem steuerbaren Dämpfungsglied (DG), einem steuerbaren optischen Verstärker (EDFA), einem Koppler (K2), einem Signalgemischeingang (E), einem Signalgemischausgang (A) und einer Steuereinheit (CTRL) zur Ermittlung von Steuersignalen für das steuerbare Dämpfungsglied (DG) und den steuerbaren optischen Verstärkern (EDFA),
bei der der Signalgemischeingang (E) über eine Serienschaltung aus steuerbarem Dämpfungsglied (DG), steuerbaren optischen Verstärker (EDFA) und Koppler (K2) mit dem Signalgemischausgang (A) verbunden ist,
bei der ein Teil des Signalgemisches am Ausgang des steuerbaren optischen Verstärkers (EDFA) über den Koppler (K2) der Steuereinheit (CTRL) zuführbar ist, und
bei der in der Steuereinheit (CTRL) die Steuersignale in Abhängigkeit der einzelnen Signalpegel der optischen Signale des Teils des Signalgemisches ermittelbar sind.

2. Optische Verstärkereinrichtung (REG) nach Anspruch 1,
**dadurch gekennzeichnet, daß** der optische Verstärker ein mit einem Element aus der Gruppe der seltenen Erden dotierter Faserverstärker ist.

3. Optische Verstärkereinrichtung (REG) nach Anspruch 1,
**dadurch gekennzeichnet, daß** die Steuereinheit (CTRL) einen wellenlängenselektiven Koppler (K3) zum Filtern der optischen Signale aus dem Signalgemisch beinhaltet.

4. Optische Verstärkereinrichtung (REG) nach Anspruch 1,
**dadurch gekennzeichnet, daß** die Steuereinheit (CTRL) optisch/elektrische Umsetzer (OE1, OE2) zur Umsetzung der optischen Signale in elektrische Signale und eine Korrektureinheit (KOR) zur Ermittlung der Steuersignale aus den Signalpegeln der elektrischen Signale beinhaltet.

5. Optische Verstärkereinrichtung (REG) nach Anspruch 4, **dadurch gekennzeichnet, daß** die Korrektureinheit (KOR) einen Speicher beinhaltet, in dem Werte der Verstärkungskurven des steuerbaren optischen Verstärkers (EDFA) für unterschiedliche Eingangspegel und Wellenlängen abgespeichert sind, und
daß die Steuersignale durch Vergleich der Signalpegel der optischen Signale des Teils des Signalgemisches mit den abgespeicherten Werten ermittelbar sind.

6. Optische Verstärkereinrichtung (REG) nach Anspruch 1,
**dadurch gekennzeichnet, daß** die optischen Signale mit Wellenlängen im Bereich 1520 nm bis 1570 nm übertragen werden.

## Claims

1. Optical amplifier device (REG) for transmitting composite signals comprising optical signals having different wavelengths, comprising a controllable attenuator (DG), a controllable optical amplifier (EDFA), a coupler (K2), a composite-signal input (E), a composite-signal output (A) and a control unit (CTRL) for determining control signals for the controllable attenuator (DG) and the controllable optical amplifiers (EDFA),
wherein the composite-signal input (E) is connected via a series connection comprising controllable attenuator (DG), controllable optical amplifier (EDFA) and coupler (K2) to the composite-signal output (A),
wherein a part of the composite signal at the output of the controllable optical amplifier (EDFA) can be fed via the coupler (K2) to the control unit (CTRL), and
wherein the control signals can be determined in the control unit (CTRL) as a function of the individual signal levels of the optical signals of the part of the composite signal.

2. Optical amplifier device (REG) according to Claim 1, **characterized in that** the optical amplifier is a fibre amplifier doped with an element selected from the group comprising the rare earths.

3. Optical amplifier device (REG) according to Claim 1, **characterized in that** the control unit (CTRL) contains a wavelength-selective coupler (K3) for filtering the optical signals from the composite signal.

4. Optical amplifier device (REG) according to Claim 1, **characterized in that** the control unit (CTRL) contains optical/electrical converters (OE1, OE2) for converting the optical signals into electrical signals and a correcting unit (KOR) for determining the control signals from the signal levels of the electrical signals.

5. Optical amplifier device (REG) according to Claim 4, **characterized in that** the correcting unit (KOR) contains a memory in which values of the gain curves of the controllable optical amplifier (EDFA) are stored for various input levels and wavelengths, and **in that** the control signals can be determined by comparing the signal levels of the optical signals of the part of the composite signal with the stored values.

6. Optical amplifier device (REG) according to Claim 1, **characterized in that** the optical signals are transmitted with wavelengths in the range 1520 nm to 1570 nm.

## Revendications

1. Système amplificateur optique (REG) destiné à la transmission de mélanges de signaux formés de signaux optiques de différentes longueurs d'ondes, comprenant un organe d'atténuation (DG) pouvant être commandé, un amplificateur optique (EDFA) pouvant être commandé, un coupleur (K2), une entrée de mélange de signaux (E), une sortie de mélange de signaux (A) et une unité de commande (CTRL) pour la détermination de signaux de commande destinés à l'organe d'atténuation (DG) pouvant être commandé et à l'amplificateur optique (EDFA) pouvant être commandé,
dans lequel l'entrée mélange de signaux (E) est reliée à la sortie de mélange de signaux (A) par l'intermédiaire d'un circuit série constitué de l'organe d'atténuation (DG) pouvant être commandé, de l'amplificateur optique (EDFA) pouvant être commandé et du coupleur (K2),
dans lequel une partie du mélange de signaux à la sortie de l'amplificateur optique (EDFA) pouvant être commandé, peut être amené, par l'intermédiaire du coupleur (K2), à l'unité de commande (CTRL), et
dans lequel les signaux de commande peuvent être déterminés dans l'unité de commande (CTRL), en fonction des niveaux de signal individuels des signaux optiques de ladite partie du mélange de signaux.

2. Système amplificateur optique (REG) selon la revendication 1, **caractérisé en ce que** l'amplificateur optique est un amplificateur à fibres dopé avec un élément du groupe des terres rares.

3. Système amplificateur optique (REG) selon la revendication 1, **caractérisé en ce que** l'unité de commande (CTRL) englobe un coupleur (K3) sélectif en longueur d'onde pour le filtrage des signaux optiques du mélange de signaux.

4. Système amplificateur optique (REG) selon la revendication 1, **caractérisé en ce que** l'unité de commande (CTRL) englobe des convertisseurs optiques/électriques (OE1, OE2) destinés à la conversion des signaux optiques en signaux électriques, et une unité de correction (KOR) destinée à la détermination des signaux de commande à partir des niveaux de signal des signaux électriques.

5. Système amplificateur optique (REG) selon la revendication 4, **caractérisé en ce que** l'unité de correction (KOR) englobe une mémoire dans laquelle sont mémorisées des valeurs des courbes de gain d'amplification de l'amplificateur optique (EDFA) pouvant être commandé, pour différents niveaux d'entrée et différentes longueurs d'ondes, et **en ce que** les signaux de commande peuvent être déterminés par comparaison des niveaux de signal des signaux optiques de ladite partie du mélange de signaux avec les valeurs mémorisées.

6. Système amplificateur optique (REG) selon la revendication 1, **caractérisé en ce que** les signaux optiques sont transmis avec des longueurs d'onde dans une plage de 1520 nm à 1570 nm.
